# EUROPEAN PATENT APPLICATION

(11) **EP 0 971 258 A2**
(43) Date of publication of application: **12.01.2000**
(21) Application number: 99113275.4
(22) Date of filing: 08.07.1999
(51) Int. Cl.: G02F 1/1335, F21V 13/04

(54) **Surface light source device**

(30) Priority: 09.07.1998 JP 19408998
(71) Applicant: SONY CORPORATION, Tokyo (JP)
(72) Inventor: Yamamoto, Kouichi, Shinagawa-ku, Tokyo (JP)
(74) Representative: MÜLLER & HOFFMANN Patentanwälte

(57) **Abstract**

Disclosed is a surface light source device capable of realizing a high frontal luminance while eliminating non-uniformity of luminance. The surface light source device includes a plurality of fluorescent tubes (15) arranged in parallel to each other along a specific plane; a reflector (12) formed into a corrugated shape in cross-section, which is disposed at the back of the fluorescent tubes (15); a diffuser (17) disposed in front of the fluorescent tubes (15); and a prism sheet (18) disposed on the front side of the diffuser (17) such that prisms of the prism sheet (18) extend in parallel to axial lines of the fluorescent tubes (15). The light source is used with a liquid crystal panel (22) to form a liquid crystal display.

## Description

### BACKGROUND OF THE INVENTION

The present invention relates to a surface light source device, and particularly to a surface light source device suitable for a light source means of a transmission type panel display.

In a transmission type liquid crystal display, as disclosed in for example Japanese Patent Laid-open No. Hei 8-304607, it is required to dispose a surface light source device on the back side of a liquid crystal panel and to light the panel using the surface light source device as a backlight.

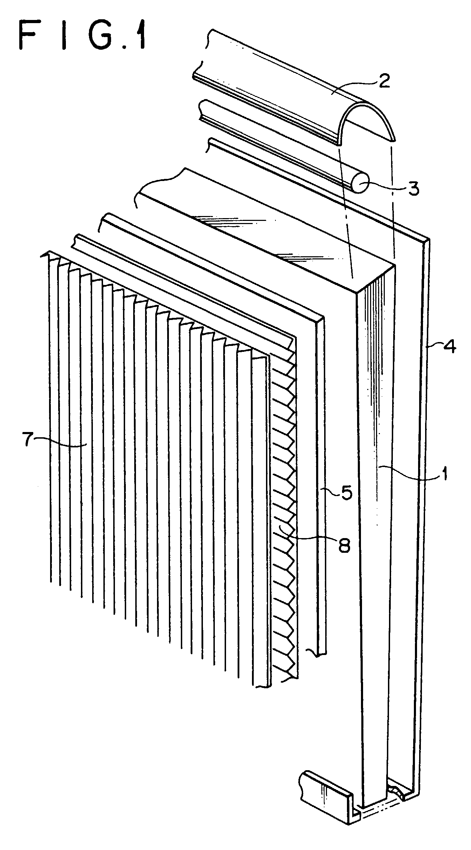

Fig. 1 shows one example of such a surface light source device. The surface light source device is of a side edge type.

In this surface light source device, a fluorescent tube 3 is located in a U-shaped reflector 2 such that light is made incident on an upper edge of a light guide plate 1 made from an acrylic resin.

Light emitted from the fluorescent tube 3 is transmitted in the light guide plate 1, being reflected from the tilt plane on the backside of the light guide plate 1 and a back side reflector 4, and is emerged from the front surface of the light guide plate 1.

A diffuser sheet 5 is disposed on the front side of the light guide plate 1 in order to eliminate non-uniformity of luminance due to the light guide plate 1 and the reflector 4.

Two prism sheets 7 and 8 are disposed on the diffuser sheet 5 such that the extending direction of projecting barrier ribs, that is, prisms of one prism sheet 7 is perpendicular to that of the other prism sheet 8.

Since one prism sheet 8 forwardly converges only a light component diffused in one direction, the second prism sheet 7 is additionally disposed in order to forwardly converge a light component which is diffused in another direction, that is, right and left in Fig. 1 and which has not been converged by the first prism sheet 8.

With such an arrangement of the prism sheets 7 and 8, it is possible to forwardly converge the light components diffused in all the directions and hence to obtain a high surface luminance.

The surface light source device including a combination of these prism sheet 7 and 8 disposed on the front side can obtain a high frontal luminance with less electric power; however, such a device is disadvantageous in that the viewing angle becomes very narrow because light components diffused in different directions are forwardly converged.

The above surface light source device having the above-described problem, however, has been used as a backlight for a small-sized liquid crystal display.

The reason for this is that the backlight for a small-sized liquid crystal display used for a notebook type personal computer or the like is required to have a higher frontal luminance and a lower power consumption in preference.

That is to say, in the above applications such as a note-type personal computer, the narrow viewing angle of the surface light source device presents no problem.

On the other hand, there has been developed a display using a plasma addressed liquid crystal panel capable of realizing a large screen.

Such a display has been used for color TV sets, and as information displays in public utilities.

For such a panel display having a large screen, the viewing angle also becomes important.

Accordingly, a surface light source device used particularly as a backlight for large-sized liquid crystal displays has come to be required to ensure a high viewing angle as well as a high luminance.

### SUMMARY OF THE INVENTION

An object of the present invention is to provide a surface light source device capable of ensuring a high viewing angle as well as a high luminance.

To achieve the above object, according to a first aspect of the present invention, there is provided a surface light source device including:
a plurality of line light sources arranged in parallel to each other along a specific plane;
a diffuser disposed in front of the line light sources in such a manner as to be substantially in parallel to the specific plane; and
a prism sheet disposed on the front side of the diffuser in such a manner as to be substantially in parallel to the specific plane such that grooves and projecting ribs of the prism sheet extend substantially in parallel to axial lines of the line light sources.

A reflector may be disposed at the back of the line light sources.

The reflector may have recesses and projections which are alternately formed and which extend in the length direction of the line light sources, and the line light sources may be located in front of the recesses of the reflector.

A light transmittance of the above diffuser may be in a range of 50 to 75%, preferably, 55 to 60%.

The non-uniformity of luminance of light, which has passed through the diffuser, in the direction perpendicular to the axial lines of the line light sources arranged along the specific plane may be in a range of 5 to 40%, preferably, 10 to 30%.

An arrangement pitch of prisms constituting the prism sheet may be in a range of 1/10 to 1/200, preferably, 1/20 to 1/100 of a diameter of the line light source.

According to a second aspect of the present invention, there is provided surface light source device including:
a plurality of line light sources arranged in parallel to each other along a specific plane;
a reflector disposed at the back of the line light sources; and
a diffuser disposed on the front side of the line light sources;
wherein the reflector has recesses and projections and the line light sources are located in front of the recesses of the reflector;
the diffuser is low in haze; and
a prism sheet is disposed on the front side of the diffuser in such a manner that the extending direction of prisms constituting the prism sheet substantially corresponds to the length direction of the line light sources.

The reflector may be formed into a corrugated shape in cross-section. Further, the device may be arranged on the back side of a transmission type panel display.

According to one preferred embodiment of the present invention, there is provided a surface light source device characterized in that
a plurality of cylindrical fluorescent tubes used as light sources are arranged in parallel to each other along a specific plane;
a reflector formed into a corrugated shape in cross-section is disposed at the back of the fluorescent tubes, and a diffuser for diffusing light is disposed on the front side of the fluorescent tubes; and
a prism sheet is disposed on the front side of the diffuser.

In particular, as the diffuser disposed on the front side of the fluorescent tubes, there may be used a diffuser having a low haze and a high light transmittance specified to exhibit the non-uniformity of luminance in a range of 5 to 40%, preferably, 10 to 30%.

The prism sheet disposed on the front side of the diffuser may be configured such that the extending direction of prisms constituting the prism sheet is parallel to the length direction of the fluorescent tubes, whereby the non-uniform luminance is reduced by the prism sheet.

Such a surface light source device can obtain a high frontal luminance, and can be suitably used, particularly, as a backlight for a large-sized plasma addressed liquid crystal display panel.

The surface light source device can be also suitably used as a surface light source for a sign board of a type requiring a high luminance surface light source disposed directly on the back side of the sign board or as a light source for a large-sized guideboard in public utilities of a type requiring not only a high luminance but also a horizontal viewing angle.

### BRIEF DESCRIPTION OF THE DRAWINGS

Fig. 1 is a perspective view of an essential portion of a prior art surface light source device;
Fig. 2 is a vertical sectional view of a plasma addressed liquid crystal display using a surface light source device of the present invention as a backlight;
Fig. 3 is an enlarged vertical sectional view of a plasma addressed liquid crystal panel used for the plasma addressed liquid crystal display;
Fig. 4 is a perspective view of a prism sheet used for the surface light source device of the present invention;
Fig. 5 is an enlarged sectional view of an essential portion showing the principle of the prism sheet used for the surface light source device of the present invention;
Fig. 6 is an enlarged vertical sectional view showing a state in which light is refracted by the prism sheet used for the surface light source device of the present invention;
Fig. 7 is a graph showing a luminance characteristic in the transverse direction depending on the viewing angle for the surface light source device of the present invention using the prism sheet;
Fig. 8 is a graph showing a luminance characteristic in the vertical direction depending on the viewing angle for the surface light source device of the present invention using the prism sheet; and
Fig. 9 is a graph showing relative relationships between arrangements of fluorescent tubes and frontal luminance for surface light source devices.

### DETAILED DESCRIPTION OF A PREFERRED EMBODIMENT

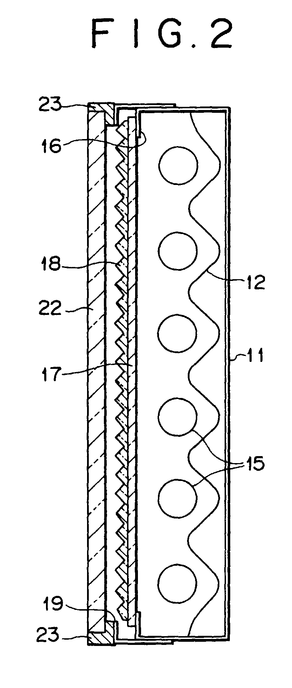

Fig. 2 shows a plasma addressed liquid crystal display to which a surface light source device according to one embodiment of the present invention is used as a backlight.

The display includes a rectangular flat case 11 in which a reflector 12 is disposed on a back side inner wall of the case 11. The reflector 12 is formed into an approximately corrugated shape in cross-section.

A plurality of fluorescent tubes 15 are disposed in front of the reflector 12 in such a manner as to be substantially aligned with recessed portions of the corrugated shape of the reflector 12.

A diffuser 17 is mounted on the front surface portion of the case 11 in such a manner as to close a front side opening 16 of the case 11. A prism sheet 18 is disposed on the front surface of the diffuser 17.

Prisms formed into isosceles triangles in cross-section are provided on the front surface of the prism sheet 18.

The prisms are arranged in such a manner as to extend in the direction of axial lines of the fluorescent tubes 15, that is, in the transverse direction.

The prism sheet 18 is retained by a presser frame 19.

A liquid crystal panel 22 is disposed on the front side of the prism sheet 18.

The liquid crystal panel 22 is configured as, for example, a plasma addressed liquid crystal panel.

The panel 22 is mounted to the case 11 in a state in which the peripheral edge of the panel 22 is supported by a supporting frame 23.

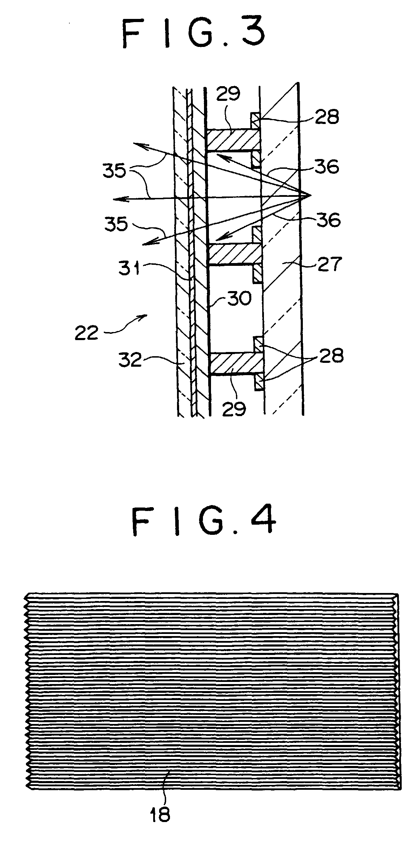

Fig. 3 shows, on an enlarged scale, the liquid crystal panel 22. The liquid crystal panel 22 includes a glass substrate 27 on the surface of which pairs of electrodes 28 are formed at specific positions.

Barrier ribs 29 projecting on the front side are provided on the glass substrate 27 in such a manner as to be held between the pairs of electrodes 28. A panel having a three-layer structure of an insulator 30, a liquid crystal 31, and a color filter glass 32 is mounted to the glass substrate 27 by the barrier ribs 29.

In the plasma liquid crystal panel 22, since the electrodes 28 made from typically nickel for making small the electric resistance of the electrodes 28 are formed on the glass substrate 27, they shade light coming from a backlight.

Accordingly, the light transmittance of the panel 22 is lower than that of a TFT (Thin Film Transistor) type liquid crystal panel.

As described above, the plasma addressed liquid crystal panel 22 includes the barrier ribs 29 for partitioning a plasma channel.

Each rib 29 forms a wall surface extending in a line in the transverse direction. Accordingly, when the panel 22 is viewed from the front side, the barrier ribs 29 function like a blind mounted to a window.

As a result, of illuminating light rays 35 and 36 coming from the back side of the liquid crystal panel 22, the light rays 35 go forwardly; however, the light rays 36 do not go forwardly because they are shaded by the barrier ribs 29. For this reason, the utilization factor of light is reduced.

In order to achieve power-saving by increasing the utilization factor of light while ensuring a high frontal luminance in the plasma addressed liquid crystal panel, it becomes important to forwardly converge light emitted from the backlight.

Such a liquid crystal panel 22 is combined with the surface light source device, to form the liquid crystal display shown in Fig. 2.

A large-sized liquid crystal display is required to have a high luminance depending on the use thereof. In particular, as described above, a plasma addressed liquid crystal panel is lower in transmittance of light coming from a backlight than a TFT type liquid crystal display panel.

Accordingly, the surface light source device for the plasma addressed liquid crystal panel 22 is required to emit a large quantity of light by increasing the number of the fluorescent tubes 15 as the light sources.

For this reason, the direct type surface light source device shown in Fig. 2 is preferably used for the panel 22 in place of the side edge type shown in Fig. 1 in which only several pieces of the fluorescent tubes 15 can be disposed beside the panel 22.

In the direct type surface light source device, light rays coming from the fluorescent tubes 15 are reflected from the reflector 12 disposed at the back of the fluorescent tubes 15, so that the light rays directly, forwardly emitted from the fluorescent tubes 15 and the light rays reflected from the reflector 12 are introduced to the diffuser 17 and are diffused by the diffuser 17.

The light rays thus emerged forwardly from the diffuser 17 are forwardly converged by the prism sheet 18, to improve the utilization factor of light.

The prism sheet 18 is, as shown in Fig. 4, a sheet material made from a polycarbonate resin or acrylic resin on the surface of which fine prisms formed into isosceles triangles in cross-section are provided in such a manner as to be spaced with a specific pitch.

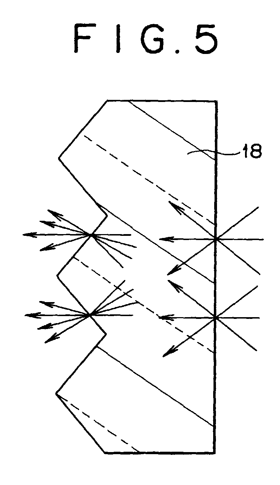

As shown in Fig. 5, when light rays are incident on the backface of the prism sheet 18 on which no grooves are formed, those incident obliquely in a certain angle range are refracted by the prism portions of the prism sheet 18 to be emerged from surfaces of the groove portions at angles being substantially near a right angle with respect to the plane of the prism sheet 18.

The use of the prism sheet 18, therefore, increases the frontal luminance by forwardly converging light rays diffused in the direction perpendicular to the groove portions of the prism sheet 18 as shown in Fig. 5.

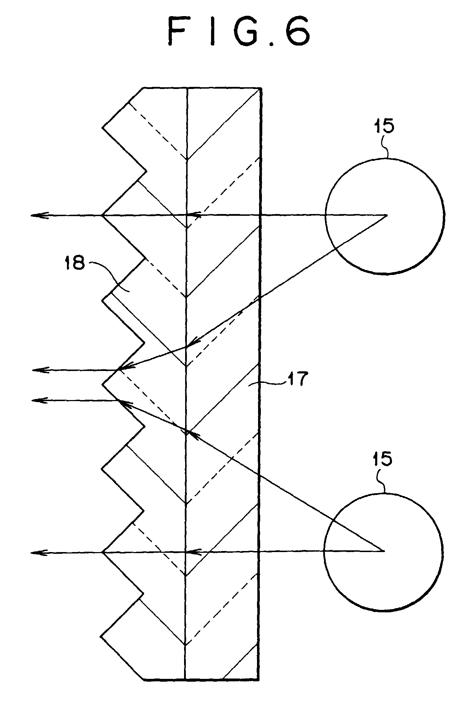

Fig. 6 shows a model to explain the function of the prism sheet 18. For the surface light source device in which the fluorescent tubes 15 are directly arranged at the back of the diffuser 17, portions in front of the fluorescent tubes 15 become very bright and portions in front of gaps between the adjacent fluorescent tubes 15 become relatively dark, to cause non-uniformity of luminance.

To eliminate such non-uniformity of luminance by diffusing light, the diffuser 17 formed of an acrylic plate or sheet in which a light diffusion material is mixed is disposed in front of the fluorescent tubes 15.

Here, for the surface light source device of the plasma addressed liquid crystal panel 22, in order to forwardly converge light only in one direction, for example, in the vertical direction, one prism sheet 18 is disposed in such a manner that the prisms of the prism sheet 18 extend in the direction parallel to the length direction of the fluorescent tubes 15.

If the diffuser 17 is small in haze and high in light transmittance, it may be assumed that most of light rays emitted from the fluorescent tubes 15 straight-forwardly pass through the diffuser 17. In this case, light rays straight-forwardly emitted from the fluorescent tubes 15 straight-forwardly pass through the diffuser 17, and then also straight-forwardly pass through the prism sheet 18 without any refraction, to be emerged forwardly from the prism sheet 18.

Actually, the arrangement pitch of the prisms of the prism sheet 18 is much smaller than the diameter of the fluorescent tube 15 and is generally set in a range of 1/20 to 1/100 of the diameter of the fluorescent tube 15.

Since light rays emitted from the fluorescent tube 15 at an angle relatively near zero go substantially straight-forwardly toward the vertexes of the prisms of the prism sheet 18, such a case may be approximated by the model shown in Fig. 6.

Light rays, which are emitted from each fluorescent tube 15 and go obliquely toward a location corresponding to the gap between the tube 15 and the adjacent tube 15, are obliquely incident on the prism sheet 18, being obliquely refracted in the prism sheet 18, and are emerged forwardly from the prism sheet 18.

In this way, the frontal luminance of a portion corresponding to each gap between the adjacent fluorescent tubes 15 can be increased. This means that the prism sheet 18 has a function capable of reducing the non-uniformity of luminance between the portions in front of the fluorescent tubes 15 and the portions in front of the gaps between the adjacent fluorescent tubes 15.

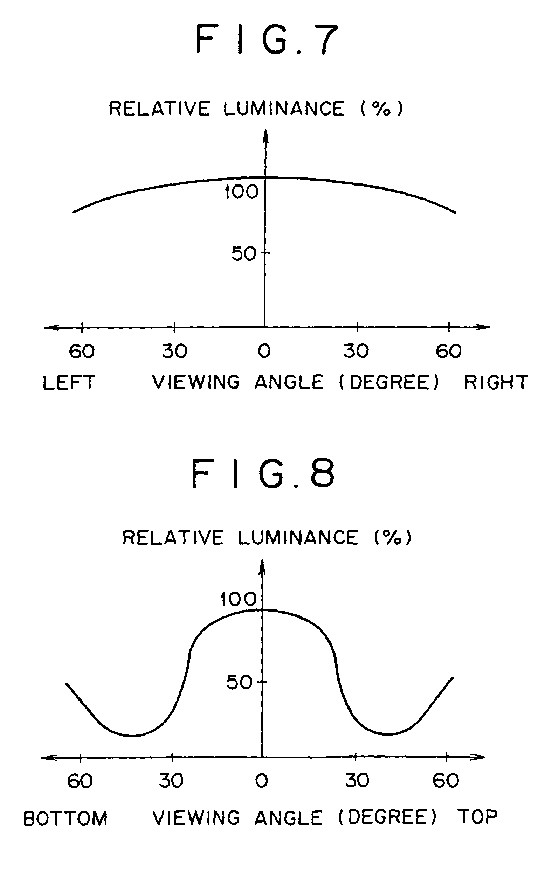

Fig. 7 shows a luminance characteristic in the transverse direction depending on the viewing angle for the surface light source device using the prism sheet 18.

As is apparent from Fig. 7, it is possible to obtain a flat luminance characteristic in the transverse direction through the prism sheet 18.

Fig. 8 shows a luminance characteristic in the vertical direction depending on the viewing angle for the surface light source device using the prism sheet 18. As is apparent from Fig. 8, it is possible to obtain a forwardly converged luminance characteristic in the vertical direction by the effect of the prism sheet 18. In this way, the use of one prism sheet 18 with the prisms extending in the transverse direction makes it possible to obtain a surface light source capable of effectively increasing the frontal luminance in the vertical direction and ensuring a viewing angle wide in the transverse direction in which the shading effect of the barrier ribs 29 of the panel 22 does not appear.

In particular, the direct type surface light source shown in Fig. 2 according to this embodiment is intended to restrict both the arrangement direction of the fluorescent tubes 15 and the extending direction of the prisms of the prism sheet 18 so as to obtain a high frontal luminance.

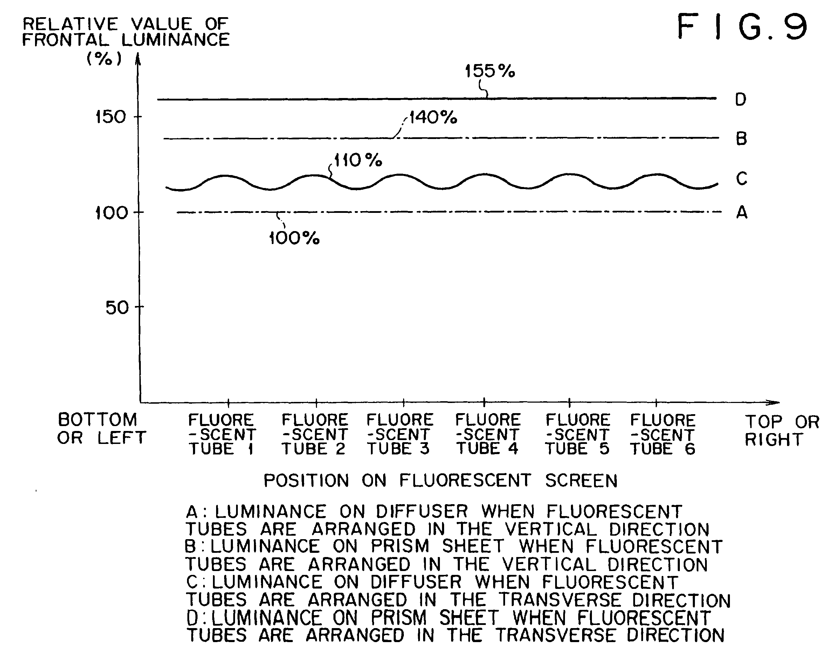

For the surface source having the configuration shown in Fig. 2, even if the diffuser 17 is low in haze and high in light transmittance and thereby the frontal luminance on the diffuser 17 has several % of the non-uniformity of luminance between the portions in front of the fluorescent tubes 15 and the portions in front of the gaps between the adjacent fluorescent tubes 15 as shown in data "C" in Fig. 9, the non-uniformity of luminance of light having passed through the prism sheet 18 disappears as shown by data "D" in Fig. 9.

To suppress the non-uniformity luminance of light having passed through the prism sheet 18 in a range of 2 to 5%, it is preferable to use the diffuser 17 having a haze and a light transmittance which are selected to allow the non-uniformity of luminance on the diffuser 17 to be set in a range of 5 to 40%, preferably, 10 to 30%, although the non-uniformity of luminance is dependent on both the arrangement pitch of the prisms of the prism sheet 18 and the angle of the vertexes of the prisms.

For comparison, description will be made of a light source having the same configuration as that shown in Fig. 2 except that the fluorescent tubes 15 are arranged in such a manner that the axial lines thereof extend not in the direction perpendicular to the paper plane but in the vertical direction, that is, in the height direction.

In this case, light rays emitted from the fluorescent tubes 15 are spread in the transverse direction, that is, in the direction perpendicular to the axial lines of the fluorescent tubes 15 and little spread in the vertical direction.

The prism sheet 18 disposed such that the prisms extend in the direction perpendicular to the paper plane does not have the function capable of reducing the non-uniformity of luminance in the transverse direction.

As a result, in this case, to eliminate the final non-uniformity of luminance of light having passed through the prism sheet 18, the non-uniformity of luminance of light having passed through the diffuser 17 must be eliminated. In other words, in this case, it is essential to use the diffuser 17 which is large in haze and low in light transmittance.

As a result of experiments performed by the inventor, in a unit composed of a surface light source having a longitudinal thickness of 40 mm, which uses the fluorescent tubes 15 specified such that the diameter of the fluorescent tube 15 is 8 mm and the center distance between the fluorescent tubes 15, that is, the arrangement pitch of the fluorescent tubes 15 is 35 mm, and which uses the prism sheet 18 specified such that the arrangement pitch of the vertexes of the prisms is 0.15 mm, the diffuser 17 having a light transmittance of 55 to 60% must be used for eliminating the non-uniformity of light having passed through the prism sheet 18.

On the contrary, in the surface light source shown in Fig. 2, in which the fluorescent tubes 15 are arranged in the transverse direction, that is, in the direction perpendicular to the paper plane, since the prism sheet 18 has the function capable of reducing the non-uniformity of luminance in the vertical direction, the non-uniformity of luminance of light having passed through the prism sheet 18 can be eliminated by using the diffuser 17 having a light transmittance of 65 to 70%.

Such changes in luminance of light are shown in Fig. 9. For the light source device in which the fluorescent tubes 15 are arranged in the vertical direction, the non-uniformity of luminance must be perfectly eliminated on the diffuser 17 as shown by data A, and for the light source device in which the fluorescent tubes 15 are disposed in the transverse direction, the luminance on the diffuser 17, shown by data C, becomes higher than that shown by the data A although the non-uniformity of luminance occurs on the diffuser 17.

Here, the same prism sheet 18 is disposed on both the above light source device with the fluorescent tubes 15 disposed in the vertical direction and the above light source device with the fluorescent tubes 15 disposed in the transverse direction. In this case, for the former device, the luminance of light having passed through the prism sheet 18 is as shown by data B, and for the latter device, the luminance of light having passed through the prism sheet 18 is as shown by data D. That is to say, for the light source device in which the fluorescent tubes 15 are disposed in the transverse direction, that is, in parallel to the extending direction of the prisms of the prism sheet 18, the luminance of light having passed through the prism sheet 18, shown by the data D, is about 10% higher than the luminance shown by the data B obtained for the light source device in which the fluorescent tubes 15 are disposed in the vertical direction.

In this way, the surface light source device according to this embodiment can obtain a high frontal luminance using the diffuser 17 which has a high light transmittance and thereby allows non-uniformity of luminance to some extent, by arranging the prism sheet 17 on the front side of the diffuser 17 such that the prisms extend in the direction of the axial lines of the fluorescent tubes 15 thereby making use of the function of capable of reducing the non-uniformity of luminance of light passing through the prism sheet 18.

As described above, according to the present invention, there is provided a surface light source device including: a plurality of line light sources arranged in parallel to each other along a specific plane; a diffuser disposed in front of the line light sources in such a manner as to be substantially in parallel to the specific plane; and a prism sheet disposed on the front side of the diffuser in such a manner as to be substantially in parallel to the specific plane such that grooves and projecting ribs of the prism sheet extend substantially in parallel to axial lines of the line light sources.

With this configuration, non-uniformity of luminance in the direction perpendicular to the length direction of the line light sources can be suppressed by means of the prism sheet disposed such that the grooves and projecting ribs thereof extend in parallel to the axial lines of the line light sources.

A reflector may be disposed at the back of the line light sources. With this configuration, since light emitted rearwardly from the line light sources is reflected from the reflector, it is possible to improve the utilization factor of light.

The reflector may be provided with recesses and projections which are alternately formed and which extend in the length direction of the line light sources; and the line light sources may be located in front of the recesses of the reflector. With this configuration, light rearwardly emitted from the line light sources is reflected particularly from the recessed portions of the reflector.

A light transmittance of the diffuser may be in a range of 50 to 75%. With this configuration, it is possible to obtain a high frontal luminance.

The non-uniformity of luminance of light, which has passed through the diffuser, in the direction perpendicular to the axial lines of the line light sources arranged along the specific plane may be in a range of 5 to 40%. With this configuration, it is possible to absorb the non-uniformity of luminance in such a range by means of the prism sheet.

An arrangement pitch of prisms constituting the prism sheet may be in a range of 1/10 to 1/200 of a diameter of the line light source. With this configuration, it is possible to substantially forwardly refract light obliquely emitted from the line light sources by means of the prism sheet.

According to the present invention, there is also provided a surface light source device including: a plurality of line light sources arranged in parallel to each other along a specific plane; a reflector disposed at the back of the line light sources; and a diffuser disposed on the front side of the line light sources; wherein the reflector has recesses and projections and the line light sources are located in front of the recesses of the reflector; the diffuser is a diffuser with a low haze; and a prism sheet is disposed on the front side of the diffuser in such a manner that the extending direction of prisms constituting the prism sheet substantially corresponds to the length direction of the line light sources.

With this configuration, it is possible to obtain a high frontal luminance by the diffuser with a low haze and absorb the non-uniform luminance in the direction perpendicular to the arrangement direction of the line light sources by the prism sheet, and hence to provide a surface light source device capable of forwardly emitting uniform light.

The reflector may be formed into a corrugated shape in cross-section. With this configuration, light rearwardly emitted from the line light sources is reflected from the corrugated reflector.

The device may be arranged on the back side of a transmission type panel display. With this configuration, it is possible to illuminate such a transmission type panel display from the back side with a high luminance.

## Claims

1. A surface light source device comprising:
a plurality of line light sources arranged in parallel to each other along a specific plane;
a diffuser disposed in front of said line light sources in such a manner as to be substantially in parallel to said specific plane; and
a prism sheet disposed on the front side of said diffuser in such a manner as to be substantially in parallel to said specific plane such that grooves and projecting ribs of said prism sheet extend substantially in parallel to axial lines of said line light sources.

2. A surface light source device according to claim 1, further comprising a reflector disposed at the back of said line light sources.

3. A surface light source device according to claim 2, wherein said reflector has recesses and projections which are alternately formed and which extend in the length direction of said line light sources; and
said line light sources are located in front of said recesses of said reflector.

4. A surface light source device according to claim 1, wherein a light transmittance of said diffuser is in a range of 50 to 75%.

5. A surface light source device according to claim 1, wherein non-uniformity of luminance of light, which has passed through said diffuser, in the direction perpendicular to the axial lines of said line light sources arranged along said specific plane is in a range of 5 to 40%.

6. A surface light source device according to claim 1, wherein an arrangement pitch of prisms constituting said prism sheet is in a range of 1/10 to 1/200 of a diameter of said line light source.

7. A surface light source device comprising:
a plurality of line light sources arranged in parallel to each other along a specific plane;
a reflector disposed at the back of said line light sources; and
a diffuser disposed on the front side of said line light sources;
wherein said reflector has recesses and projections and said line light sources are located in front of said recesses of said reflector;
said diffuser is low in haze; and
a prism sheet is disposed on the front side of said diffuser in such a manner that the extending direction of prisms constituting said prism sheet substantially corresponds to the length direction of said line light sources.

8. A surface light source device according to claim 7, wherein said reflector is formed into a corrugated shape in cross-section.

9. A surface light source device according to claim 7, wherein said device is arranged on the back side of a transmission type panel display.
